(19) Europäisches Patentamt
European Patent Office
Office européen des brevets

(11) EP 4 570 771 A1

(12) **EUROPEAN PATENT APPLICATION**
published in accordance with Art. 153(4) EPC

(43) Date of publication:
**18.06.2025 Bulletin 2025/25**

(21) Application number: **23852409.4**

(22) Date of filing: **28.07.2023**

(51) International Patent Classification (IPC):
***C03C 27/12*** *(2006.01)* ***B32B 7/028*** *(2019.01)*
***B32B 27/00*** *(2006.01)*

(52) Cooperative Patent Classification (CPC):
**B32B 7/028; B32B 17/00; B32B 27/00**

(86) International application number:
**PCT/JP2023/027809**

(87) International publication number:
**WO 2024/034436 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 JP 2022128242**

(71) Applicant: **Sekisui Chemical Co., Ltd.**
**Osaka-shi, Osaka 530-8565 (JP)**

(72) Inventors:
- **TSUNODA, Ryuta**
  **Kouka-shi, Shiga 528-8585 (JP)**
- **HAMADA, Takanori**
  **Kouka-shi, Shiga 528-8585 (JP)**
- **HAYASHI, Tetsuya**
  **Kouka-shi, Shiga 528-8585 (JP)**

(74) Representative: **Ter Meer Steinmeister & Partner Patentanwälte mbB**
**Nymphenburger Straße 4**
**80335 München (DE)**

(54) **INTERMEDIATE FILM FOR LAMINATED GLASS, AND LAMINATED GLASS**

(57) Provided is an interlayer film for laminated glass that is less likely to curve. An interlayer film for laminated glass according to the present invention includes a first resin layer containing a thermoplastic resin; a second resin layer containing a thermoplastic resin; and an optical film, and the first resin layer is arranged on a first surface side of the optical film, the second resin layer is arranged on a second surface side opposite to the first surface of the optical film, a thickness T1 of the first resin layer is smaller than a thickness T2 of the second resin layer, a ratio of a heat shrinkage rate A1 of the first resin layer in a direction where heat shrinkage rate of the first resin layer becomes maximum to a heat shrinkage rate A2 of the second resin layer in a direction where heat shrinkage rate of the second resin layer becomes maximum is more than 1 and 5 or less.

[FIG. 1]

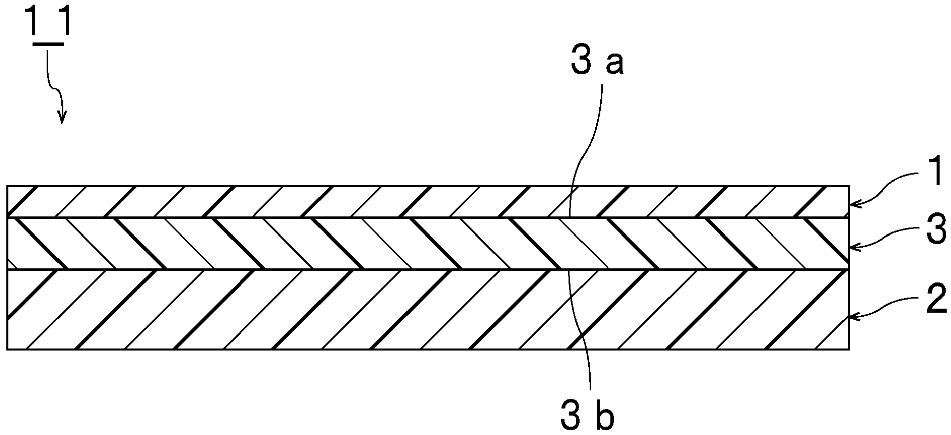


EP 4 570 771 A1

## Description

### TECHNICAL FIELD

The present invention relates to an interlayer film for laminated glass that is used for obtaining laminated glass. Also, the present invention relates to laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

As the interlayer film, an interlayer film including an optical film such as an infrared reflective film is sometimes used.

For example, in the following Patent Document 1, an interlayer film including a first adhesion layer, a heat reflective film (infrared reflective film), and a second adhesion layer is described. The heat reflective film includes a resin film having a heat shrinkage rate in a direction where heat shrinkage rate becomes maximum of 0.5% or more and 3% or less, and a heat shrinkage rate in a direction perpendicular to the foregoing direction of 0.1% or more and 2% or less, and a heat reflective membrane formed on the resin film. The first adhesion layer and the second adhesion layer are polyvinyl butyral films having a heat shrinkage rate of 0.5% or more and 3% or less in the direction where heat shrinkage rate becomes maximum and a heat shrinkage rate in a direction perpendicular to the foregoing direction of -2.5% or more and -0.5% or less. Also, in the interlayer film, the direction where heat shrinkage rate of the resin film becomes maximum, and the direction where heat shrinkage rate of the polyvinyl butyral film becomes maximum are orthogonal to each other. In Patent Document 1, polyvinyl butyral films having the same thickness are used as the first adhesion layer and the second adhesion layer.

### Related Art Document

### Patent Document

Patent Document 1: WO2011/078137 A1

### SUMMARY OF THE INVENTION

### PROBLEMS TO BE SOLVED BY THE INVENTION

As described in Patent Document 1, an interlayer film including a first resin layer, an optical film, and a second resin layer in this order is known. However, in the conventional interlayer film including a first resin layer, an optical film, and a second resin layer in this order, the interlayer film is sometimes curved unintentionally. In the interlayer film in which the thickness of the first resin layer and the thickness of the second resin layer are the same, although curving of the interlayer film can be suppressed to some extent, the interlayer film is liable to curve when the thickness of the first resin layer and the thickness of the second resin layer are different from each other.

If the interlayer film curves, a gap is liable to be formed between the interlayer film and a lamination glass member in producing a laminated glass, so that the production efficiency of laminated glass may deteriorate, and a void may be formed in the laminated glass.

It is an object of the present invention to provide an interlayer film for laminated glass that is less likely to curve. It is also an object of the present invention to provide a laminated glass prepared with the interlayer film for laminated glass.

### MEANS FOR SOLVING THE PROBLEMS

According to a broad aspect of the present invention, there is provided an interlayer film for laminated glass (hereinafter, sometimes referred to as interlayer film) including: a first resin layer containing a thermoplastic resin; a second resin layer containing a thermoplastic resin; and an optical film, the first resin layer being arranged on a first surface side of the optical film, the second resin layer being arranged on a second surface side opposite to the first surface of the optical film, a thickness T1 of the first resin layer being smaller than a thickness T2 of the second resin layer, a ratio of a heat shrinkage rate A1 of the first resin layer in a direction where heat shrinkage rate of the first resin layer becomes maximum to a heat shrinkage rate A2 of the second resin layer in a direction where heat shrinkage rate of the second resin layer

becomes maximum being more than 1 and 5 or less.

According to a broad aspect of the present invention, there is provided an interlayer film for laminated glass (hereinafter, sometimes referred to as interlayer film) including: a first resin layer containing a thermoplastic resin; a second resin layer containing a thermoplastic resin; and an optical film, the first resin layer being arranged on a first surface side of the optical film, the second resin layer being arranged on a second surface side opposite to the first surface of the optical film, a thickness T1 of the first resin layer being smaller than a thickness T2 of the second resin layer, a ratio of a heat shrinkage rate A1 of the first resin layer in a direction where heat shrinkage rate of the first resin layer becomes maximum to a heat shrinkage rate A2 of the second resin layer in a direction where heat shrinkage rate of the second resin layer becomes maximum being more than 1, a value X determined by a formula (X) below from the heat shrinkage rate A1 of the first resin layer in the direction where heat shrinkage rate of the first resin layer becomes maximum, the heat shrinkage rate A2 of the second resin layer in the direction where heat shrinkage rate of the second resin layer becomes maximum, the thickness T1 of the first resin layer, and the thickness T2 of the second resin layer being more than 0.5 and 2.5 or less:

$$\text{Value } X = (A1 \times T1)/(A2 \times T2) \cdots (X)$$

In a specific aspect of the interlayer film according to the present invention, a ratio of the thickness T1 of the first resin layer to the thickness T2 of the second resin layer is 0.98 or less.

In a specific aspect of the interlayer film according to the present invention, a heat shrinkage rate A3 of the optical film in a direction where heat shrinkage rate of the optical film becomes maximum is -1% or more and 1% or less.

In a specific aspect of the interlayer film according to the present invention, an absolute value of difference between the heat shrinkage rate A1 of the first resin layer and the heat shrinkage rate A3 of the optical film is 33% or less, or an absolute value of difference between the heat shrinkage rate A2 of the second resin layer and the heat shrinkage rate A3 of the optical film is 22% or less.

In a specific aspect of the interlayer film according to the present invention, the optical film is a multilayer resin film.

In a specific aspect of the interlayer film according to the present invention, the first resin layer or the second resin layer contains a heat shielding substance.

In a specific aspect of the interlayer film according to the present invention, the first resin layer contains a heat shielding substance, and the second resin layer does not contain a heat shielding substance, or contains a heat shielding substance in a content that is smaller than a content of the heat shielding substance in 100% by weight of the first resin layer.

In a specific aspect of the interlayer film according to the present invention, a visible light transmittance of the first resin layer and a visible light transmittance of the second resin layer are different from each other.

In a specific aspect of the interlayer film according to the present invention, a ratio of the thickness T1 of the first resin layer to the thickness T2 of the second resin layer is 0.1 or more and 0.98 or less, and a ratio of the thickness T3 of the optical film to the thickness T2 of the second resin layer is 0.02 or more and 0.55 or less.

In a specific aspect of the interlayer film according to the present invention, a maximum distance from a surface of a pedestal to a bottom surface of an interlayer film for laminated glass measured by a measuring method below is 15 mm or less.

The measuring method of maximum distance from the surface of the pedestal to the bottom surface interlayer film for laminated glass: an interlayer film for laminated glass of 100 mm long and 100 mm wide is heated in water at 60°C for 30 minutes, and then cooled in water at 20°C for 5 minutes. The interlayer film for laminated glass after cooling is placed on a horizontal and flat pedestal and left to stand at 20°C for 1 minute, and a maximum distance from the surface of the pedestal to the bottom surface of the interlayer film for laminated glass at this time is measured.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

## EFFECT OF THE INVENTION

According to the present invention, it is possible to provide an interlayer film for laminated glass that is less likely to curve.

## BRIEF DESCRIPTION OF DRAWINGS

[Fig. 1] Fig. 1 is a sectional view schematically showing an interlayer film for laminated glass according to one embodiment of the present invention.

[Fig. 2] Fig. 2 is a sectional view schematically showing an example of laminated glass prepared with the interlayer film for laminated glass shown in Fig. 1.

## MODES FOR CARRYING OUT THE INVENTION

Hereinafter, the details of the present invention will be described.

(Interlayer film for laminated glass)

The interlayer film for laminated glass (in the present specification, sometimes abbreviated as "interlayer film") according to the present invention is used for laminated glass.

The interlayer film according to the present invention includes a first resin layer containing a thermoplastic resin, a second resin layer containing a thermoplastic resin, and an optical film. In the interlayer film according to the present invention, the first resin layer is arranged on a first surface side of the optical film, and the second resin layer is arranged on a second surface side opposite to the first surface of the optical film.

In the interlayer film according to the present invention, a thickness T1 of the first resin layer is smaller than a thickness T2 of the second resin layer.

The interlayer film according to the present invention satisfies a configuration (1) or a configuration (2) below. Regarding directions of the resin layer, "the direction where heat shrinkage rate of the resin layer becomes maximum" is "the direction showing the maximum heat shrinkage rate of the resin layer".

Configuration (1): A ratio (A1/A2) of a heat shrinkage rate A1 of the first resin layer in the direction where heat shrinkage rate of the first resin layer becomes maximum to a heat shrinkage rate A2 of the second resin layer in the direction where heat shrinkage rate of the second resin layer becomes maximum is more than 1 and 5 or less.

Configuration (2): A ratio (A1/A2) of a heat shrinkage rate A1 of the first resin layer in the direction where heat shrinkage rate of the first resin layer becomes maximum to a heat shrinkage rate A2 of the second resin layer in the direction where heat shrinkage rate of the second resin layer becomes maximum is more than 1. A value X determined by the following formula (X) from a heat shrinkage rate A1 of the first resin layer in the direction where heat shrinkage rate of the first resin layer becomes maximum, a heat shrinkage rate A2 of the second resin layer in the direction where heat shrinkage rate of the second resin layer becomes maximum, a thickness T1 of the first resin layer, and a thickness T2 of the second resin layer is more than 0.5 and 2.5 or less.

$$\text{Value X} = (A1 \times T1)/(A2 \times T2) \cdots (X)$$

The interlayer film according to the present invention is less likely to curve because of having the above configuration. In the interlayer film according to the present invention, it is possible to make the interlayer film less likely to curve despite the difference between the thickness T1 of the first resin layer and the thickness T2 of the second resin layer in the interlayer film including an optical film.

The interlayer film may satisfy the configuration (1), may satisfy the configuration (2), and may satisfy the configuration (1) and the configuration (2). From the viewpoint of exerting the effect of the present invention more effectively, it is preferred that the interlayer film satisfy the configuration (1) and the configuration (2).

In the present specification, the heat shrinkage rate A1 of the first resin layer in the direction where heat shrinkage rate of the first resin layer becomes maximum is sometimes abbreviated as "heat shrinkage rate A1 of the first resin layer", and the heat shrinkage rate A2 of the second resin layer in the direction where heat shrinkage rate of the second resin layer becomes maximum is sometimes abbreviated as "heat shrinkage rate A2 of the second resin layer".

In the interlayer film, the thickness T1 of the first resin layer and the thickness T2 of the second resin layer are different from each other. In the interlayer film, the thickness T1 of the first resin layer is smaller than the thickness T2 of the second resin layer. Therefore, in the interlayer film according to the present invention, a ratio (T1/T2) of the thickness T1 of the first resin layer to the thickness T2 of the second resin layer is smaller than 1.

The ratio (T1/T2) is preferably 0.1 or more, more preferably 0.2 or more, further preferably 0.3 or more, especially preferably 0.4 or more, and is preferably 0.98 or less, more preferably 0.9 or less, further preferably 0.8 or less, especially preferably 0.7 or less. In a conventional interlayer film, curvature becomes liable to occur when the ratio (T1/T2) is the above-described upper limit or less, however, in the interlayer film according to the present invention, it is possible to make the interlayer film less likely to curve even when the ratio (T1/T2) is the above-described upper limit or less. Also, when the ratio (T1/T2) is the above-described upper limit or less, it is possible to make the thickness of the first resin layer small, so that it is possible to reduce the cost of the first resin layer, and it is possible to reduce the weight of the interlayer film. Also, when the ratio (T1/T2) is the above-described lower limit or more, it is possible to make the interlayer film still less likely to

curve.

A ratio (T3/T2) of the thickness T3 of the optical film to the thickness T2 of the second resin layer is preferably 0.02 or more, more preferably 0.05 or more, further preferably 0.10 or more, especially preferably 0.13 or more, and is preferably 0.55 or less, more preferably 0.50 or less, further preferably 0.30 or less, especially preferably 0.20 or less. In a conventional interlayer film, curvature becomes liable to occur when the ratio (T3/T2) is the above-described lower limit or more, however, in the interlayer film according to the present invention, it is possible to make the interlayer film less likely to curve even when the ratio (T3/T2) is the above-described lower limit or more. Also, when the ratio (T3/T2) is the above-described upper limit or less, it is possible to make the interlayer film less likely to curve.

An absolute value of difference between the thickness T1 of the first resin layer and the thickness T2 of the second resin layer is preferably 10 μm or more, more preferably 100 μm or more, further preferably 200 μm or more, and is preferably 500 μm or less, more preferably 400 μm or less, further preferably 350 μm or less. When the absolute value of difference is the above-described lower limit or more and the above-described upper limit or less, it is possible to make the interlayer film still less likely to curve.

The thickness T1 of the first resin layer is preferably 100 μm or more, more preferably 150 μm or more, further preferably 200 μm or more, and is preferably 800 μm or less, preferably less than 800 μm, more preferably 760 μm or less, more preferably less than 760 μm, further preferably 720 μm or less. When the thickness T1 of the first resin layer is the above-described lower limit or more, it is possible to enhance the handleability of the first resin layer in producing the interlayer film. When the thickness T1 of the first resin layer is the above-described upper limit or less (or less than the above-described upper limit), the trimming in preparation of laminated glass is facilitated.

The thickness T2 of the second resin layer is preferably more than 100 μm, more preferably more than 150 μm, further preferably more than 200 μm, especially preferably 300 μm or more, most preferably 350 μm or more, and is preferably 820 μm or less, more preferably 800 μm or less, further preferably 780 μm or less, especially preferably 760 μm or less. When the thickness T2 of the second resin layer is the above-described lower limit or more (or more than the above-described lower limit), it is possible to enhance the handleability of the second resin layer in producing the interlayer film. When the thickness T2 of the second resin layer is the above-described upper limit or less, the trimming in preparation of laminated glass is facilitated.

The thickness T3 of the optical film is preferably 35 μm or more, more preferably 40 μm or more, further preferably 45 μm or more, and is preferably 120 μm or less, more preferably 110 μm or less, further preferably 100 μm or less. In the interlayer film according to the present invention, even when the thickness T3 is the above-described lower limit or more, it is possible to make the interlayer film less likely to curve. Also, when the thickness T3 is the above-described upper limit or less, it is possible to make the interlayer film still less likely to curve.

Each of the thickness T1 of the first resin layer, the thickness T2 of the second resin layer, and the thickness T3 of the optical film means an average thickness. To be more specific, when the thickness of the first resin layer is uniform, the thickness T1 of the first resin layer means the thickness (equivalent to the average thickness), and when the thickness of the first resin layer is nonuniform, the thickness T1 of the first resin layer means the average thickness. When the thickness of the second resin layer is uniform, the thickness T2 of the second resin layer means the thickness (equivalent to the average thickness), and when the thickness of the second resin layer is nonuniform, the thickness T2 of the second resin layer means the average thickness. When the thickness of the optical film is uniform, the thickness T3 of the optical film means the thickness (equivalent to the average thickness), and when the thickness of the optical film is nonuniform, the thickness T3 of the optical film means the average thickness.

The ratio (A1/A2) of the heat shrinkage rate A1 of the first resin layer to the heat shrinkage rate A2 of the second resin layer is more than 1, and is preferably 1.25 or more, more preferably 1.50 or more, and is preferably 5 or less, more preferably 4 or less, further preferably 3 or less. When the ratio (A1/A2) is the above-described lower limit or more (or more than the above-described lower limit) and the above-described upper limit or less, it becomes possible to the interlayer film still less likely to curve.

The value X determined by the formula (X) is preferably more than 0.5, more preferably 0.55 or more, further preferably 0.6 or more, especially preferably 0.65 or more, and is preferably 2.5 or less, more preferably 2.0 or less, further preferably 1.5 or less, especially preferably 1.0 or less. When the value X is the above-described lower limit or more (or more than the above-described lower limit) and the above-described upper limit or less, it is possible to make the interlayer film still less likely to curve.

The heat shrinkage rate A1 of the first resin layer is preferably more than 5%, more preferably more than 7.5%, further preferably more than 10%, especially preferably 12.5% or more, most preferably 20% or more, and is preferably 40% or less, more preferably 35% or less, further preferably 30% or less. When the heat shrinkage rate A1 of the first resin layer is the above-described lower limit or more (or more than the above-described lower limit) and the above-described upper limit or less, it is possible to make the interlayer film still less likely to curve.

The heat shrinkage rate A2 of the second resin layer is preferably 5% or more, more preferably 7.5% or more, further preferably 10% or more, and is preferably 40% or less, more preferably 35% or less, further preferably 30% or less. When the heat shrinkage rate A2 of the second resin layer is the above-described lower limit or more and the above-described upper limit or less, it is possible to make the interlayer film still less likely to curve.

The heat shrinkage rate A3 of the optical film in the direction where heat shrinkage rate of the optical film becomes maximum (in the present specification, sometimes abbreviated as "heat shrinkage rate A3 of the optical film") is preferably -2% or more, more preferably -1% or more, further preferably -0.5% or more, and is preferably 2% or less, more preferably 1% or less, further preferably 0.5% or less. When the heat shrinkage rate A3 of the optical film is the above-described lower limit or more and the above-described upper limit or less, it is possible to make the interlayer film still less likely to curve.

The heat shrinkage rate A1 of the first resin layer may be larger than or smaller than the heat shrinkage rate A3 of the optical film. The heat shrinkage rate A1 of the first resin layer and the heat shrinkage rate A3 of the optical film may be the same.

An absolute value of difference between the heat shrinkage rate A1 of the first resin layer and the heat shrinkage rate A3 of the optical film is preferably 0% or more, and is preferably 33% or less, more preferably 30% or less, still more preferably 25% or less, further preferably 20% or less, still further preferably 15% or less, especially preferably 8.0% or less. When the absolute value of difference is the above-described upper limit or less, it is possible to make the interlayer film still less likely to curve. An absolute value of difference between the heat shrinkage rate A1 of the first resin layer and the heat shrinkage rate A3 of the optical film may be more than 0%, may be 0.1% or more, may be 0.5% or more, and may be 1.0% or more.

The heat shrinkage rate A2 of the second resin layer may be larger than or smaller than the heat shrinkage rate A3 of the optical film. The heat shrinkage rate A2 of the second resin layer and the heat shrinkage rate A3 of the optical film may be the same.

An absolute value of difference between the heat shrinkage rate A2 of the second resin layer and the heat shrinkage rate A3 of the optical film is preferably 0% or more, and is preferably 22% or less, more preferably 20% or less, still more preferably 15% or less, further preferably 10% or less, especially preferably 8.0% or less. When the absolute value of difference is the above-described upper limit or less, it is possible to make the interlayer film still less likely to curve. An absolute value of difference between the heat shrinkage rate A2 of the second resin layer and the heat shrinkage rate A3 of the optical film may be more than 0%, may be 0.1% or more, may be 0.5% or more, and may be 1.0% or more.

From the viewpoint of making the interlayer film still less likely to curve, it is preferred that the absolute value of difference between the heat shrinkage rate A1 of the first resin layer and the heat shrinkage rate A3 of the optical film be 33% or less, or it is preferred that the absolute value of difference between the heat shrinkage rate A2 of the second resin layer and the heat shrinkage rate A3 of the optical film be 22% or less. The absolute value of difference between the heat shrinkage rate A1 of the first resin layer and the heat shrinkage rate A3 of the optical film may be 33% or less, and the absolute value of difference between the heat shrinkage rate A2 of the second resin layer and the heat shrinkage rate A3 of the optical film may be 22% or less. The absolute value of difference between the heat shrinkage rate A1 of the first resin layer and the heat shrinkage rate A3 of the optical film is 33% or less, and the absolute value of difference between the heat shrinkage rate A2 of the second resin layer and the heat shrinkage rate A3 of the optical film is 22% or less. By approximating the heat shrinkage rate A3 of the optical film to at least one of the heat shrinkage rate A1 of the first resin layer and the heat shrinkage rate A2 of the second resin layer, it is possible to make the interlayer film still less likely to curve.

A larger absolute value of two absolute values: the absolute value of difference between the heat shrinkage rate A1 of the first resin layer and the heat shrinkage rate A3 of the optical film, and the absolute value of difference between the heat shrinkage rate A2 of the second resin layer and the heat shrinkage rate A3 of the optical film is preferably 0% or more, preferably 33% or less, more preferably 30% or less, further preferably 28% or less. When the larger absolute value is the above-described upper limit or less, it is possible to make the interlayer film still less likely to curve. The larger absolute value may be more than 0%, may be 0.1% or more, and may be 0.5% or more, and may be 1.0% or more.

A heat shrinkage rate B1 of the first resin layer in a direction perpendicular to the direction where heat shrinkage rate of the first resin layer becomes maximum (in the present specification, sometimes abbreviated as "heat shrinkage rate B1 of the first resin layer") is preferably -15% or more, more preferably -10% or more, and is preferably 0% or less, more preferably -1% or less. When the heat shrinkage rate B1 of the first resin layer is the above-described lower limit or more and the above-described upper limit or less, it is possible to make the interlayer film still less likely to curve.

A heat shrinkage rate B2 of the second resin layer in a direction perpendicular to the direction where heat shrinkage rate of the second resin layer becomes maximum (in the present specification, sometimes abbreviated as "heat shrinkage rate B2 of the second resin layer") is preferably -10% or more, more preferably -8% or more, and is preferably 0% or less, more preferably -1% or less. When the heat shrinkage rate B2 of the second resin layer is the above-described lower limit or more and the above-described upper limit or less, it is possible to make the interlayer film still less likely to curve.

A heat shrinkage rate B3 of the optical film in a direction perpendicular to the direction where heat shrinkage rate of the optical film becomes maximum (in the present specification, sometimes abbreviated as "heat shrinkage rate B3 of the optical film") is preferably -1% or more, more preferably -0.5% or more, and is preferably 1% or less, more preferably 0.5% or less. When the heat shrinkage rate B3 of the optical film is the above-described lower limit or more and the above-described upper limit or less, it is possible to make the interlayer film still less likely to curve.

A ratio (B1/B2) of the heat shrinkage rate B1 of the first resin layer to the heat shrinkage rate B2 of the second resin layer is preferably more than 1.0, more preferably 1.4 or more, and is preferably 5.0 or less, more preferably 4.0 or less, further preferably 3.0 or less. When the ratio (B1/B2) is the above-described lower limit or more (or more than the above-described lower limit) and the above-described upper limit or less, it is possible to make the interlayer film still less likely to curve.

A value Y determined by the following formula (Y) from the heat shrinkage rate B1 of the first resin layer, the heat shrinkage rate B2 of the second resin layer, the thickness T1 of the first resin layer, and the thickness T2 of the second resin layer is preferably 0.45 or more, more preferably 0.65 or more, and is preferably 2.10 or less, more preferably 1.60 or less. When the value Y is the above-described lower limit or more and the above-described upper limit or less, it is possible to make the interlayer film still less likely to curve.

$$\text{Value } Y = (B1 \times T1)/(B2 \times T2) \cdots (Y)$$

The heat shrinkage rate is measured in the following manner.

The first resin layer, the second resin layer and the optical film constituting the interlayer film are individually prepared. The first resin layer, the second resin layer and the optical film may be delaminated from the interlayer film to prepare the first resin layer, the second resin layer and the optical film, respectively. Next, each of the first resin layer, the second resin layer and the optical film is heated in water at 60°C for 30 minutes, and then cooled in water at 20°C for 5 minutes. From a dimension L1 of a measurement object before heating at 60°C for 30 minutes, and a dimension L2 of the measurement object after heating at 60°C for 30 minutes and cooling at 20°C for 5 minutes, a heat shrinkage rate is calculated according to the following formula. When the first resin layer, the second resin layer and the optical film may be delaminated from the interlayer film to prepare the first resin layer, the second resin layer and the optical film, respectively, it is preferred that the dimension L1 be measured before delaminating the first resin layer, the second resin layer and the optical film from the interlayer film.

$$\text{Heat shrinkage rate (\%)} = (L1 - L2)/L1 \times 100$$

L1: Dimension before heating at 60°C for 30 minutes (mm)
L2: Dimension after heating at 60°C for 30 minutes and cooling at 20°C for 5 minutes (mm)

It is preferred that the interlayer film have an MD direction and a TD direction. For example, the interlayer film is obtained by extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film.

The direction where heat shrinkage rate of the first resin layer becomes maximum is normally the MD direction of the interlayer film. The direction where heat shrinkage rate of the second resin layer becomes maximum is normally the MD direction of the interlayer film.

As a method of reducing the heat shrinkage rate A1 of the first resin layer and the heat shrinkage rate A2 of the second resin layer, a method of reducing application of stress on each resin layer, a method of relaxing the stress applied to each resin layer and the like can be recited. By appropriately adjusting the heat shrinkage rate A1 of the first resin layer and the heat shrinkage rate A2 of the second resin layer, it is possible to satisfy the aforementioned configuration (1) or it is possible to satisfy the aforementioned configuration (2).

The interlayer film may be an interlayer film having a three-layer structure of the first resin layer, the second resin layer and the optical film. The interlayer film may be an interlayer film having a three or more-layer structure.

Hereinafter, specific embodiments of the present invention will be described with reference to the drawings.

Fig. 1 is a sectional view schematically showing an interlayer film for laminated glass according to one embodiment of the present invention. In Fig. 1, a section in the thickness direction of an interlayer film 11 is shown.

The interlayer film 11 shown in Fig. 1 is used for obtaining laminated glass. The interlayer film 11 is an interlayer film for laminated glass. The interlayer film 11 includes a first resin layer 1, a second resin layer 2, and an optical film 3. The first resin layer 1 is arranged on a first surface 3a of the optical film 3 to be layered thereon. The second resin layer 2 is arranged on a second surface 3b opposite to the first surface 3a of the optical film 3 to be layered thereon. Each of the first resin layer 1 and the second resin layer 2 is a protective layer and is a surface layer in the present embodiment. The optical film 3 is arranged between the first resin layer 1 and the second resin layer 2 to be sandwiched therebetween.

In the interlayer film 11, the thickness T1 of the first resin layer 1 is smaller than the thickness T2 of the second resin layer 2. The interlayer film 11 satisfies the configuration (1) or the configuration (2).

In this connection, other layers may be arranged between the first resin layer 1 and the optical film 3 and between

the second resin layer 2 and the optical film 3. It is preferred that the first resin layer 1 and the optical film 3, and the second resin layer 2 and the optical film 3, respectively, be directly layered.

Hereinafter, other details of layers constituting the interlayer film according to the present invention are described.

(Optical film)

Examples of the optical film include a polyethylene terephthalate film (PET film), an infrared reflective film, a film for display, and the like.

Examples of the infrared reflective film include a resin film with metal foil, a multilayer laminate film in which a metal layer and a dielectric layer are formed on a resin film, a multilayer resin film, and a liquid crystal film, and the like. These films have the property of reflecting infrared rays.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin film is a multilayer laminate film in which any number of layers of the metal layer and the dielectric layer are alternately layered on the resin film. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

Examples of the material of the resin film in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to both faces or either face of the metal layer. Examples of the material of the coating layer include ZnO, $Al_2O_3$, $Ga_2O_3$, $InO_3$, MgO, Ti, NiCr and Cu. Also, examples of the dielectric layer in the multilayer laminate film include indium oxide.

The multilayer resin film is a laminate film in which a plurality of resin films are layered. As the material of the multilayer resin film, those exemplified as the material of the resin film in the multilayer laminate film can be exemplified. The number of layered resin films in the multilayer resin film is 2 or more, may be 3 or more, may be 5 or more, may be 1000 or less, may be 100 or less, and may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of any wavelength are layered can be recited. Such a liquid crystal film is so configured that desired infrared reflecting property is obtained.

The infrared reflective film may contain infrared reflective particles. The infrared reflective particles are particles having the infrared reflecting property, and for example, tabular particles having a thickness of 1 nm or more and 1000 $\mu m$ or less can be recited. For example, in the resin film in which silver nano tabular particles are dispersed, an infrared reflective film having infrared reflecting property is obtained by adjusting the thickness, the surface area and the arrangement state of the silver nano tabular particles.

Examples of commercially available products of the PET film include "Lumirror 100-U34" and "Lumirror 100-U48" available from TORAY INDUSTRIES, INC., "DIA FOIL O-100E" available from Mitsubishi Chemical Corporation, and the like. Examples of commercially available products of the infrared reflective film include "Ultra-multilayer resin film Nano 90S" and "Ultra-multilayer resin film Nano 80S" available from 3M, and "XIR-75" available from Southwall Technologies Inc., and the like.

Examples of the film for display include a film containing light diffusion particles and a thermoplastic resin. The film for display containing light diffusion particles and a thermoplastic resin may contain a plasticizer.

Examples of the light diffusion particles include semimetal or metal oxide particles, metal particles, and diamond particles, and the like. Examples of the semimetal or metal oxide particles include silicon oxide particles (for example, silica particles), zirconium oxide particles, titanium oxide particles, aluminum oxide particles (for example, alumina particles), magnesium oxide particles, and cerium particles and the like. Examples of the metal particles include aluminum particles, silver particles, platinum particles, gold particles, titanium particles, nickel particles, tin particles, indium particles, and tin-cobalt alloy particles, and the like.

From the viewpoint of enhancing the transparency, the light diffusibility and the contrast of image display as laminated glass for display (laminated glass of image display), it is preferred that the light diffusion particles be metal particles, more preferably silver particles.

The light diffusion particles may be core-shell particles. A core-shell particle refers to a particle including a core, and a shell covering the core. Examples of the core in the core-shell particles include the aforementioned semimetal or metal oxide particles, metal particles, and diamond particles, and the like. The shell in the core-shell particle is made of a material different from that of the core, and examples of the material include the aforementioned semimetal or metal oxides, composites of a semimetal or metal oxide and a polymer, and the like. The light diffusion particles may be core-shell particles including a semimetal or metal oxide as a core, and metal as a shell. For example, in the core-shell particle, the core may be a silver particle, and the shell may be a composite of silica, alumina or a mixture thereof, and a polymer such as polyvinylpyrrolidone. Also, for example, the core-shell particle may be such that the core is a silica particle, and the shell may be silver or other metal.

An average particle diameter of the light diffusion particles is preferably 1 nm or more, more preferably 3 nm or more, further preferably 5 nm or more, especially preferably 10 nm or more, and is preferably 100 μm or less, more preferably 50 μm or less, further preferably 20 μm or less, especially preferably 5 μm or less. When the average particle diameter is the above-described lower limit or more and the above-described upper limit or less, the visible light is satisfactorily diffused by the light diffusion particles, and the contrast of an image when the image is displayed on the laminated glass can be made satisfactory.

The average particle diameter of the light diffusion particles can be measured by a laser diffraction/scattering method.

In 100% by weight of the film for display, a content of the light diffusion particles is preferably 0.00005% by weight or more, more preferably 0.0001% by weight or more, further preferably 0.0005% by weight or more, and is preferably 2% by weight or less, more preferably 1% by weight or less, further preferably 0.5% by weight or less, especially preferably 0.1% by weight or less, most preferably 0.03% by weight or less. When the content of the light diffusion particles is the above-described lower limit or more, visible light is diffused more excellently by the light diffusion particles and the image can be displayed appropriately. When the content of the light diffusion particles is the above-described upper limit or less, the light is not excessively shielded by the light diffusion particles, and the transparency of the interlayer film can be enhanced.

As the thermoplastic resin in the film for display, a thermoplastic resin that is described in the later-described sections of the first resin layer and the second resin layer can be used. Also, as the plasticizer in the film for display, a plasticizer that is described in the later-described sections of the first resin layer and the second resin layer can be used.

A content of the plasticizer in the film for display per 100 parts by weight of the thermoplastic resin in the film for display is preferably 20 parts by weight or more, more preferably 30 parts by weight or more, further preferably 40 parts by weight or more, especially preferably 50 parts by weight or more, and is preferably 100 parts by weight or less, more preferably 90 parts by weight or less, further preferably 85 parts by weight or less, especially preferably 80 parts by weight or less. When the content of the plasticizer is the aforementioned lower limit or more, the flexibility of the interlayer film is enhanced and the handling of the interlayer film is facilitated. When the content of the plasticizer is the above-described upper limit or less, the penetration resistance of laminated glass can be enhanced.

From the viewpoint of enhancing the heat shielding property of the laminated glass, it is preferred that the optical film be an infrared reflective film, and it is preferred that the optical film be a multilayer resin film. From the viewpoint of using the laminated glass as a screen for image display, it is preferred that the optical film be a film for display.

(First resin layer and second resin layer)

<Thermoplastic resin>

The first resin layer contains a thermoplastic resin (hereinafter, sometimes described as a thermoplastic resin (1)). It is preferred that the first resin layer contain a polyvinyl acetal resin (hereinafter, sometimes described as a polyvinyl acetal resin (1)) as the thermoplastic resin (1). The second resin layer contains a thermoplastic resin (hereinafter, sometimes described as a thermoplastic resin (2)). It is preferred that the second resin layer contain a polyvinyl acetal resin (hereinafter, sometimes described as a polyvinyl acetal resin (2)) as the thermoplastic resin (2). The thermoplastic resin (1) and the thermoplastic resin (2) may be the same as or different from each other. The polyvinyl acetal resin (1) and the polyvinyl acetal resin (2) may be the same or different from each other. One kind of each of the thermoplastic resin (1) and the thermoplastic resin (2) may be used alone, and two or more kinds thereof may be used in combination. One kind of each of the polyvinyl acetal resin (1) and the polyvinyl acetal resin (2) may be used alone, and two or more kinds thereof may be used in combination.

Examples of the thermoplastic resin include a polyvinyl acetal resin, an ethylene-vinyl acetate copolymer resin,

an ethylene-acrylic acid copolymer resin, a polyurethane resin, a (meth)acrylic resin, a polyolefin resin, an ionomer resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above-described lower limit or more, the penetration resistance of the laminated glass is further enhanced. When the average polymerization degree is the aforementioned upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde having 1 to 10 carbon atoms is suitably used. Examples of the aldehyde having 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group of each of the polyvinyl acetal resin (1) and the polyvinyl acetal resin (2) is preferably 25% by mole or more, more preferably 28% by mole or more, still more preferably 30% by mole or more, further preferably more than 31% by mole, still further preferably 31.5% by mole or more, especially preferably 32% by mole or more, most preferably 33% by mole or more and is preferably 38% by mole or less, more preferably 37% by mole or less, further preferably 36.5% by mole or less, especially preferably 36% by mole or less. When the content of the hydroxyl group is the above-described lower limit or more or more than the above-described lower limit, the adhesive strength of the interlayer film is further enhanced. Moreover, when the content of the hydroxyl group is the above-described upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree of each of the polyvinyl acetal resin (1) and the polyvinyl acetal resin (2) is preferably 0.01% by mole or more, more preferably 0.5% by mole or more and is preferably 10% by mole or less, more preferably 2% by mole or less. When the acetylation degree is the aforementioned lower limit or more, the compatibility between the polyvinyl acetal resin and a plasticizer is enhanced. When the acetylation degree is the aforementioned upper limit or less, the moisture resistance of the interlayer film and laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of each of the polyvinyl acetal resin (1) and the polyvinyl acetal resin (2) (the butyralization degree in the case of a polyvinyl butyral resin) is preferably 55% by mole or more, more preferably 60% by mole or more and is preferably 75% by mole or less, more preferably 71% by mole or less. When the acetalization degree is the aforementioned lower limit or more, the compatibility between the polyvinyl acetal resin and a plasticizer is enhanced. When the acetalization degree is the above-described upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the

acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin in the first resin layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin in the first resin layer, the content of the polyvinyl acetal resin is preferably 100% by weight or less. It is preferred that the main ingredient (50% by weight or more) of the thermoplastic resin of the first resin layer be a polyvinyl acetal resin.

In 100% by weight of the thermoplastic resin in the second resin layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second resin layer, the content of the polyvinyl acetal resin is preferably 100% by weight or less. It is preferred that the main ingredient (50% by weight or more) of the thermoplastic resin of the second resin layer be a polyvinyl acetal resin.

<Plasticizer>

From the viewpoint of further enhancing the adhesive strength of an interlayer film, it is preferred that the first resin layer contain a plasticizer (hereinafter, sometimes described as a plasticizer (1)). From the viewpoint of further enhancing the adhesive strength of an interlayer film, it is preferred that the second resin layer contain a plasticizer (hereinafter, sometimes described as a plasticizer (2)). When the thermoplastic resin contained in the interlayer film is a polyvinyl acetal resin, it is especially preferred that the interlayer film (each layer) contains a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

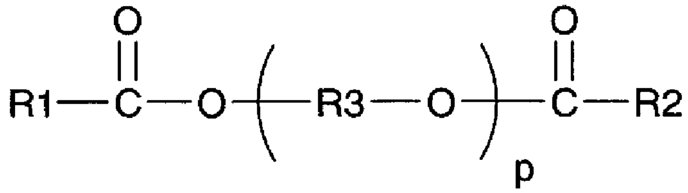

···(1)

In the formula (1), R1 and R2 each represent an organic group having 2 to 10 carbon atoms, R3 represents an ethylene group, an isopropylene group, or an n-propylene group, and p represents an integer of 3 to 10. R1 and R2 in the formula (1) each are preferably an organic group having 5 to 10 carbon atoms, and more preferably an organic group having 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer includes triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the first resin layer, the content of the plasticizer (1) relative to 100 parts by weight of the thermoplastic resin (1) is defined as content (1). In the second resin layer, the content of the plasticizer (2) relative to 100 parts by weight of the thermoplastic resin (2) is defined as content (2). Each of the content (1) and the content (2) is preferably 5 parts by weight or more, more preferably 10 parts by weight or more, still more preferably 15 parts by weight or more, further preferably 20 parts by weight or more, especially preferably 24 parts by weight or more, most preferably 25 parts by weight or more, and is preferably 45 parts by weight or less, more preferably 40 parts by weight or less, further preferably 35 parts by weight or less, especially preferably 32 parts by weight or less, most preferably 30 parts by weight or less. When the content (1) and the content (2) are the above-described lower limit or more, the flexibility of the interlayer film is enhanced and the handling of the interlayer film is facilitated. When the content (1) and the content (2) are the above-described upper limit or less, the penetration resistance of the laminated glass is further enhanced.

<Heat shielding substance>

Each of the interlayer film, the first resin layer and the second resin layer does not contain or contains a heat shielding substance, and optionally contains a heat shielding substance. It is preferred that the interlayer film contain a heat shielding substance. It is preferred that the first resin layer or the second resin layer contain a heat shielding substance. It is preferred that the first resin layer contain a heat shielding substance. It is preferred that the second resin layer contain a heat shielding substance. By containing the heat shielding substance in the first resin layer having a relatively smaller thickness, of the first resin layer and the second resin layer, it is possible to enhance the heat shielding property significantly effectively. From the viewpoint of effectively enhancing the heat shielding property, it is preferred that the first resin layer contain a heat shielding substance, and it is preferred that the second resin layer do not contain a heat shielding substance, or contain a heat shielding substance in a content smaller than the content of the heat shielding substance in 100% by weight of the first resin layer. From the viewpoint of enhancing the heat shielding property more effectively, it is preferred that the first resin layer contain the heat shielding substance, and the second resin layer do not contain the heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

In 100% by weight of the interlayer film, or in 100% by weight or the layer containing the heat shielding substance (the first resin layer or the second resin layer), a content of the heat shielding substance (for example, the total of contents of the Ingredient X and the heat shielding particles) is preferably 0.001% by weight or more, more preferably 0.005% by weight or more, more preferably 0.01% by weight or more, further preferably 0.1% by weight or more, especially preferably 1% by weight or more, most preferably 1.5% by weight or more, and is preferably 6% by weight or less, more preferably 5.5% by weight or less, further preferably 4% by weight or less, especially preferably 3.5% by weight or less, most preferably 3% by weight or less. When the content of the heat shielding substance is the above lower limit or more and the above upper limit or less, the heat shielding property is sufficiently enhanced and the visible light transmittance is sufficiently enhanced.

Ingredient X:

Each of the interlayer film, the first resin layer and the second resin layer does not contain or contains at least one kind of Ingredient X among a phthalocyanine compound, a naphthalocyanine compound, and an anthracyanine

compound, and optionally contains the Ingredient X. It is preferred that the interlayer film contain the Ingredient X. It is preferred that the first resin layer contain the Ingredient X. It is preferred that the second resin layer contain the Ingredient X. By containing the Ingredient X in the first resin layer having a relatively smaller thickness, of the first resin layer and the second resin layer, it is possible to enhance the heat shielding property significantly effectively. From the viewpoint of effectively enhancing the heat shielding property, it is preferred that the first resin layer contain the Ingredient X, and it is preferred that the second resin layer do not contain the Ingredient X, or contain the Ingredient X in a content smaller than the content of the Ingredient X in 100% by weight of the first resin layer. From the viewpoint of enhancing the heat shielding property more effectively, it is preferred that the first resin layer contain the Ingredient X, and the second resin layer do not contain the Ingredient X. The Ingredient X is a heat shielding substance. One kind of the Ingredient X may be used alone and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atom(s) and it is also preferred that the Ingredient X contain copper atom(s). It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of a layer containing the Ingredient X (the first resin layer or the second resin layer), the content of the Ingredient X is preferably 0.001% by weight or more, more preferably 0.005% by weight or more, further preferably 0.01% by weight or more, and especially preferably 0.02% by weight or more and is preferably 0.2% by weight or less, more preferably 0.1% by weight or less, further preferably 0.05% by weight or less, and especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

Heat shielding particles:

Each of the interlayer film, the first resin layer and the second resin layer does not contain or contains heat shielding particles, and optionally contains the heat shielding particles. It is preferred that the interlayer film contain heat shielding particles. It is preferred that the first resin layer contain the heat shielding particles. It is preferred that the second resin layer contain the heat shielding particles. By containing the heat shielding particles in the first resin layer having a relatively smaller thickness, of the first resin layer and the second resin layer, it is possible to enhance the heat shielding property significantly effectively. From the viewpoint of effectively enhancing the heat shielding property, it is preferred that the first resin layer contain heat shielding particles, and it is preferred that the second resin layer do not contain heat shielding particles, or contain heat shielding particles in a content smaller than the content of the heat shielding particles in 100% by weight of the first resin layer. From the viewpoint of enhancing the heat shielding property more effectively, it is preferred that the first resin layer contain the heat shielding particles, and the second resin layer do not contain the heat shielding particles. The heat shielding particles are made of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particles be particles of a metal oxide (metal oxide particles).

The energy amount of an infrared ray with a wavelength of 780 nm or longer which is longer than that of visible light is small as compared with an ultraviolet **ray.** However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection,

the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles (sodium-doped tungsten oxide particles, cesium-doped tungsten oxide particles, thallium-doped tungsten oxide particles, and rubidium-doped tungsten oxide particles, etc.), tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, and is preferably 0.1 μm or less, more preferably 0.05 μm or less. When the average particle diameter is the above-described lower limit or more, the heat ray shielding property is sufficiently enhanced. When the average particle diameter is the above-described upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of the layer containing the heat shielding particles (the first resin layer or the second resin layer), each content of the heat shielding particles is preferably 0.01% by weight or more, more preferably 0.1% by weight or more, further preferably 1% by weight or more, especially preferably 1.5% by weight or more, and is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

<Metal salt>

It is preferred that the interlayer film contain a metal salt. It is preferred that the first resin layer contain a metal salt. It is preferred that the second resin layer contain a metal salt. By the use of the metal salt, controlling the adhesivity between the interlayer film and a lamination glass member or the adhesivity between respective layers in the interlayer film is facilitated. One kind of the metal salt may be used alone, and two or more kinds thereof may be used in combination.

It is preferred that the metal salt include an alkali metal salt or an alkali earth metal salt. In this case, controlling the adhesivity between the interlayer film and a lamination glass member and the adhesivity between the first, second resin layers and the optical film is facilitated.

The alkali earth metal means six metals of Be, Mg, Ca, Sr, Ba, and Ra.

It is preferred that the metal salt contain at least one kind of metal selected from the group consisting of Li, Na, K, Rb, Cs, Mg, Ca, Sr and Ba. It is preferred that the metal salt included in the interlayer film contain at least one kind of metal among K and Mg.

It is preferred that the metal salt include a magnesium salt of an organic acid having a branched structure (P). In this case, controlling the adhesivity between the interlayer film and a lamination glass member and the adhesivity between the first, second resin layers and the optical film is further facilitated.

It is preferred that the magnesium salt of an organic acid having a branched structure (P) be a magnesium salt of a carboxylic acid having a branched structure. In this case, controlling the adhesivity between the interlayer film and a lamination glass member and the adhesivity between the first, second resin layers and the optical film is still further facilitated.

It is preferred that the metal salt be a metal salt other than a magnesium salt of an organic acid having a branched structure and include a metal salt of an organic acid having 2 or more and 8 or less carbon atoms (Q). The metal salt of an

organic acid having 2 or more and 8 or less carbon atoms (Q) is different from the magnesium salt of an organic acid having a branched structure (P). Also in this case, controlling the adhesivity between the interlayer film and a lamination glass member and the adhesivity between the first, second resin layers and the optical film is further facilitated.

It is preferred the metal salt of an organic acid having 2 or more and 8 or less carbon atoms (Q) be a magnesium salt or a potassium salt of an organic acid having 2 or more and 8 or less carbon atoms. In this case, controlling the adhesivity between the interlayer film and a lamination glass member and the adhesivity between the first, second resin layers and the optical film is still further facilitated.

It is also preferred that the metal salt include the magnesium salt of an organic acid having a branched structure (P), and the metal salt of an organic acid having 2 or more and 8 or less carbon atoms (Q).

As the metal salt, an alkali metal salt of an organic acid having 2 to 16 carbon atoms, and an alkali earth metal salt of an organic acid having 2 to 16 carbon atoms can be used. The metal salt may include a magnesium carboxylate having 2 to 16 carbon atoms, or a potassium carboxylate having 2 to 16 carbon atoms.

Examples of the magnesium carboxylate having 2 to 16 carbon atoms and the potassium carboxylate having 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film or in the layer containing the metal salt (the first resin layer or the second resin layer) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above-described lower limit or more and the above-described upper limit or less, the adhesivity between the interlayer film and a lamination glass member (e.g., glass plate) and the adhesivity between the first, second resin layers and the optical film can be further well controlled.

<Ultraviolet ray screening agent>

It is preferred that the interlayer film contain an ultraviolet ray screening agent. It is preferred that the first resin layer contain an ultraviolet ray screening agent. It is preferred that the second resin layer contain an ultraviolet ray screening agent. By the use of an ultraviolet ray screening agent, even when the laminated glass is used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole

("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl) oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of the layer containing the ultraviolet ray screening agent (the first resin layer or the second resin layer), the content of the ultraviolet ray screening agent is preferably 0.1% by weight or more, more preferably 0.2% by weight or more, further preferably 0.3% by weight or more, especially preferably 0.5% by weight or more, and is preferably 2.5% by weight or less, more preferably 2% by weight or less, further preferably 1% by weight or less, especially preferably 0.8% by weight or less. When the content of the ultraviolet ray screening agent is the above-described lower limit or more, deterioration in visible light transmittance after a lapse of a period is further suppressed. When the content of the ultraviolet ray screening agent is the above-described upper limit or less, deterioration in visible light transmittance after a lapse of a period of the interlayer film and the laminated glass can be significantly suppressed.

<Oxidation inhibitor>

It is preferred that the interlayer film contain an oxidation inhibitor. It is preferred that the first resin layer contain an oxidation inhibitor. It is preferred that the second resin layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate] methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid) ethylenebis (oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis (4, 6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010"

available from BASF Japan Ltd., and the like.

In 100% by weight of the interlayer film, or in 100% by weight of the layer containing the oxidation inhibitor (the first resin layer or the second resin layer), the content of the oxidation inhibitor is preferably 0.03% by weight or more, more preferably 0.1% by weight or more, and is preferably 2% by weight or less. When the content of the oxidation inhibitor is the above-described lower limit or more, it is possible to keep the visible light transmittance of the interlayer film and the laminated glass high for a long term. When the content of the oxidation inhibitor is the above-described upper limit or less, the effect of adding the oxidation inhibitor is exerted more effectively.

<Other ingredient>

Each of the interlayer film, the first resin layer, and the second resin layer may contain other ingredients than the above-described ingredients as necessary. Examples of other ingredients include a coloring agent (pigment and a dye, etc.), a coupling agent, a dispersing agent, a surfactant, a fire retardant, an antistatic agent, an adhesive strength adjusting agent other than metal salt, a moisture-proofing agent, and a fluorescent brightener, and the like. One kind of these other ingredients may be used alone, and two or more kinds thereof may be used in combination.

(Other details of interlayer film for laminated glass)

The interlayer film has one end and the other end being on an opposite side of the one end. The one end and the other end are both end parts facing each other in the interlayer film.

The distance between one end and the other end of the interlayer film is preferably 0.5 m or more, more preferably 0.8 m or more, especially preferably 1.0 m or more, and is preferably 3.0 m or less, more preferably 2.0 m or less, especially preferably 1.5 m or less.

The maximum thickness of the interlayer film is preferably 0.1 mm or more, more preferably 0.25 mm or more, further preferably 0.5 mm or more, especially preferably 0.8 mm or more and is preferably 3.8 mm or less, more preferably 2.0 mm or less, further preferably 1.5 mm or less.

The visible light transmittance of the first resin layer and the visible light transmittance of the second resin layer may be the same or different from each other. From the viewpoint of easily preparing interlayer films that differ in visible light transmittance from various resin layers, it is preferred that the visible light transmittance of the first resin layer and the visible light transmittance of the second resin layer be different from each other. In this case, the visible light transmittance of the first resin layer may be larger than or smaller than the visible light transmittance of the second resin layer. An absolute value of difference between the visible light transmittance of the first resin layer and the visible light transmittance of the second resin layer may be more than 0%, may be 0.1% or more, may be 0.5% or more, may be 1.0% or more, may be 50% or less, may be 30% or less, may be 20% or less, and may be 10% or less.

The visible light transmittance of the first resin layer is preferably 0.5% or more, more preferably 1.0% or more, and is preferably 90% or less, more preferably 88% or less.

The visible light transmittance of the second resin layer is preferably 0.5% or more, more preferably 1.0% or more, and is preferably 90% or less, more preferably 88% or less.

Visible light transmittance of the first resin layer and the second resin layer can be measured in the following manner.

Each of the first resin layer and the second resin layer constituting the interlayer film is prepared. From the interlayer film, the first resin layer and the second resin layer may be delaminated to prepare the first resin layer and the second resin layer, respectively. The obtained resin layer (the first resin layer or the second resin layer) is sandwiched between two sheets of 2.5-mm thick clear glass conforming to JIS R3202:1996 to obtain a laminate. The obtained laminate is put into a rubber bag and the inside thereof is degassed for 20 minutes with a degree of vacuum of 2.6 kPa, after which the laminate in the degassed condition is transferred into an oven, and vacuum-pressed by retention at 90°C for 30 minutes, and thus the laminate is preliminarily press-bonded. The preliminarily press-bonded laminate is subjected to press-bonding for 20 minutes under conditions of 135°C and a pressure of 1.2 MPa in an autoclave to obtain the laminated glass A.

The visible light transmittance of the laminated glass A is defined as the visible light transmittance of the first resin layer and the second resin layer. The visible light transmittance of the laminated glass A can be measured using a spectrophotometer ("U-4150" available from Hitachi High-Tech Science Corporation) in conformity with JIS R3212:2021. It is preferred that the visible light transmittance be measured at the center position in planar view of the first resin layer and the second resin layer.

The maximum distance from the surface of the pedestal to a bottom surface of the interlayer film for laminated glass measured by the following measuring method is preferably 15 mm or less, more preferably 9 mm or less, further preferably 6 mm or less, especially preferably 4 mm or less, most preferably 0 mm. When the maximum distance is the above-described upper limit or less, the effect of the present invention is exerted more effectively. The maximum distance

may be 0 mm or more, may be more than 0 mm, and may be 1mm or more.

The measuring method of maximum distance from the surface of the pedestal to the bottom surface of the interlayer film for laminated glass: an interlayer film for laminated glass of 100 mm long and 100 mm wide is heated in water at 60°C for 30 minutes, and then cooled in water at 20°C for 5 minutes. The interlayer film for laminated glass after cooling is placed on a horizontal and flat pedestal and left to stand at 20°C for 1 minute, and a maximum distance from the surface of the pedestal to the bottom surface of the interlayer film for laminated glass at this time is measured.

The interlayer film with a dimension of 100 mm long and 100 mm wide for measuring the maximum distance (measurement sample) has a square shape in planar view. It is preferred that the point of intersection between diagonal lines in the square be the center position between the one end and the other end of the interlayer film. Also for ease of measurement of the maximum distance, in the measurement of the maximum distance, it is preferred to leave the interlayer film to stand on the pedestal with the resin layer having a larger thickness, of the first resin layer and the second resin layer, namely the second resin layer down.

The interlayer film may be wound to be formed into a roll body of the interlayer film. The roll body may include a winding core and an interlayer film wound on the outer periphery of the winding core.

The method for producing the interlayer film is not particularly limited.

For excellent production efficiency of the interlayer film, it is preferred that the first resin layer and the second resin layer contain the same polyvinyl acetal resin. For the reason of excellent production efficiency of the interlayer film, it is more preferred that the first resin layer and the second resin layer contain the same polyvinyl acetal resin and the same plasticizer. For the reason of excellent production efficiency of the interlayer film, it is further preferred that the first resin layer and the second resin layer be formed of the same resin composition.

It is preferred that the first resin layer be a surface layer (first surface layer) of the interlayer film. It is preferred that the second resin layer be a surface layer (second surface layer) of the interlayer film.

It is preferred that the surface on the outer side of the first resin layer (the surface on the opposite side of the optical film) have protrusions and recesses. It is preferred that the surface on the outer side of the second resin layer (the surface on the opposite side of the optical film) have protrusions and recesses. Examples of the method for forming the protrusions and recesses include, but are not particularly limited to, a lip emboss method (melt fracture method), an emboss roll method, a calender roll method, and a profile extrusion method, and the like.

A surface roughness of the surface on the outer side of the first resin layer is referred to as a surface roughness R1, and a surface roughness of the surface on the outer side of the second resin layer is referred to as a surface roughness R2. Also, an average value of the surface roughness R1 and the surface roughness R2 ((surface roughness R1 + surface roughness R2)/2) is referred to as an average surface roughness.

The surface roughness R1 is preferably 15 μm or more, more preferably 20 μm or more, and is preferably 45 μm or less, more preferably 40 μm or less. When the average roughness R1 is the above-described lower limit or more and the above-described upper limit or less, it is possible to improve the degassability at the time of press-bonding between the interlayer film and a lamination glass member.

The surface roughness R2 is preferably 15 μm or more, more preferably 20 μm or more, and is preferably 45 μm or less, more preferably 40 μm or less. When the average roughness R2 is the above-described lower limit or more and the above-described upper limit or less, it is possible to improve the degassability at the time of press-bonding between the interlayer film and a lamination glass member.

An absolute value of difference between the surface roughness R1 and the average surface roughness is preferably more than 1.0 μm, more preferably 3.0 μm or more, and is preferably 20 μm or less, more preferably 15 μm or less.

An absolute value of difference between the surface roughness R2 and the average surface roughness is preferably more than 1.0 μm, more preferably 3.0 μm or more, and is preferably 20 μm or less, more preferably 15 μm or less.

The surface roughness R1 and the surface roughness R2 means a ten-point average roughness Rz measured in accordance with JIS B0601:1994. As a measuring device for measuring ten-point average roughness Rz, for example, "Surfcorder SE300" available from Kosaka Laboratory Ltd. may be used.

(Laminated glass)

A laminated glass according to the present invention includes a first lamination glass member, a second lamination glass member and the interlayer film described above. In the laminated glass according to the present invention, the interlayer film is arranged between the first lamination glass member and the second lamination glass member.

Fig. 2 is a sectional view schematically showing an example of laminated glass prepared with the interlayer film for laminated glass shown in Fig. 1.

A laminated glass 31 shown in Fig. 2 includes a first lamination glass member 21, a second lamination glass

member 22 and the interlayer film 11. The interlayer film 11 is arranged between the first lamination glass member 21 and the second lamination glass member 22 to be sandwiched therebetween.

The first lamination glass member 21 is layered on a first surface of the interlayer film 11. The second lamination glass member 22 is layered on a second surface on the opposite side of the first surface of the interlayer film 11. The first lamination glass member 21 is layered on an outer surface of the first resin layer 1. The second lamination glass member 22 is layered on an outer surface of the second resin layer 2.

The laminated glass may be a head-up display. When the laminated glass is a head-up display, the laminated glass has a display region of the head-up display. The display region is a region on which information can be favorably displayed.

A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

The interlayer film and the laminated glass can also be used as a screen for image display (hereinafter, sometimes abbreviated as "screen"). For example, light from a light source device constituting a projector or the like is applied one surface of laminated glass, and the applied light is diffused in the optical film (film for display) and displayed as an image on the screen.

The screen for image display may be of a back-projection type, or may be a front-projection type, but is preferably of a back-projection type. By employing the back-projection type, it becomes easy to realize a high-contrast image display. The screen for back-projection type image display is such a screen that light from the optical device is applied on one surface of the laminated glass, and image is observed from the other surface of the laminated glass. Meanwhile, the screen for front-projection type image display is such a screen that light from the optical device is applied on one surface of the

laminated glass, and image is observed from the one surface of the laminated glass (namely the surface on which the light from the light source device is applied).

The laminated glass can be attached, in a vehicle or a building, to an opening between an exterior space, and an interior space to which a heat ray is incident from the exterior space in such a manner that the first lamination glass member is situated on a side of the exterior space, and the second lamination glass member is situated on a side of the interior space. The interlayer film can be attached so that the first resin layer is situated on a side of the exterior space, and the second resin layer is situated on a side of the interior space. When the first resin layer having a relatively small thickness between the first resin layer and the second resin layer contains the heat shielding substance, it is possible to enhance the heat shielding property significantly effectively by locating the first resin layer on a side of the exterior space. A heat ray of sunlight or the like enters the first resin layer ahead of the second resin layer. Also, the heat ray is sometimes reflected by the optical film after passing through the first resin layer and reaching the optical film. Therefore, by enhancing the heat shielding property of the first resin layer, of the first resin layer and the second resin layer, it is possible to effectively enhance the heat shielding property of the interlayer film as a whole.

Also, the laminated glass can be attached, in a vehicle or a building, to an opening between an exterior space, and an interior space to which a heat ray is incident from the exterior space in such a manner that the first lamination glass member is situated on a side of the interior space, and the second lamination glass member is situated on a side of the exterior space. The interlayer film can be attached so that the first resin layer is situated on a side of the interior space, and the second resin layer is situated on a side of the exterior space. When the first resin layer having a relatively smaller thickness of the first resin layer and the second resin layer contains the heat shielding substance, it is possible to reduce the deterioration of the heat shielding substance by locating the first resin layer on a side of the interior space. A heat ray of sunlight or the like enters the second resin layer ahead of the first resin layer. Also, the heat ray is sometimes reflected by the optical film after passing through the second resin layer and reaching the optical film and before reaching the first resin layer. Therefore, by attaching the first resin layer so that it is situated on a side of the interior space, it is possible to reduce the deterioration of the heat shielding substance contained in the first resin layer.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials for interlayer film were prepared.

(Optical film)

Optical film A (infrared reflective film (multilayer resin film), "Multilayer Nano 90S" available from Sumitomo 3M Limited)
Optical film B (infrared reflective film, "XIR-70" available from Southwall Technologies, Inc.)
Optical film C (light scattering film, "KALEIDO SCREEN" available from JXTG Holdings, Inc.)

(Thermoplastic resin)

Polyvinyl acetal resin A (polyvinyl butyral resin: average polymerization degree: 1700, content of hydroxyl group: 30% by mole, acetylation degree: 1% by mole, acetalization degree (butyralization degree): 69% by mole)

(Plasticizer)
3GO: Triethylene glycol di-2-ethylhexanoate
(Heat shielding substance)
ITO particles: Tin-doped indium oxide particles
(Metal salt)
Mg mixture (mixture (50 : 50 (weight ratio)) of magnesium 2-ethylbutyrate and magnesium acetate)
(Ultraviolet ray screening agent)
Tinuvin326: 2-(2'-hydroxy-3'-t-butyl-5-methylphenyl)-5-chlorobenzotriazole ("Tinuvin 326" available from BASF Japan Ltd.)
(Oxidation inhibitor)
BHT: 2,6-di-t-butyl-p-cresol

(Example 1)

Preparation of resin composition for forming first resin layer:

The following ingredients were mixed, and kneaded sufficiently with a mixing roll to obtain a resin composition for forming a first resin layer.

Polyvinyl acetal resin A: 100 parts by weight
3GO: 40 parts by weight
ITO particles: An amount of 0.3% by weight in the obtained first resin layer
Mg mixture: An amount that gives a magnesium amount of 70 ppm in the obtained first resin layer
Tinuvin326: An amount of 0.2% by weight in the obtained first resin layer
BHT: An amount of 0.2% by weight in the obtained first resin layer

Preparation of resin composition for forming second resin layer:

The following ingredients were mixed, and kneaded sufficiently with a mixing roll to obtain a resin composition for forming a second resin layer.

Polyvinyl acetal resin A: 100 parts by weight
3GO: 40 parts by weight
Mg mixture: An amount that gives a magnesium amount of 70 ppm in the obtained second resin layer
Tinuvin326: An amount of 0.2% by weight in the obtained second resin layer
BHT: An amount of 0.2% by weight in the obtained second resin layer

Preparation of interlayer film:

The resin composition for forming a first resin layer was extruded with an extruder to obtain a first resin layer. Also, the resin composition for forming a second resin layer was extruded with an extruder to obtain a second resin layer. By leaving the obtained first resin layer and second resin layer to stand in an oven at 60°C, the heat shrinkage rates of the first resin layer and the second resin layer were adjusted. The first resin layer, the optical film A, and the second resin layer are layered in this order to prepare an interlayer film having a three-layer structure (the first resin layer (thickness 370 μm)/optical film A/the second resin layer (thickness 720 μm)).

Preparation of laminated glass:

The obtained interlayer film was sandwiched between two sheets of 2.5-mm thick clear glass (300 mm long × 300 mm wide) conforming to JIS R3202:1996 to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass.

(Examples 2 to 11 and Comparative Examples 1 to 5)

An interlayer film having a three-layer structure (first resin layer/optical film/second resin layer) was prepared in the same manner as in Example 1 except that the kind of the optical film, and the compositions and the thicknesses of the first and second resin layers were changed as shown in the following Table, and the standing condition of the first and second resin layers in the oven was changed. Regarding the metal salt, the ultraviolet ray screening agent, and the oxidation inhibitor, the same kinds and the same blending amounts as those in Example 1 were used. Also, using the obtained interlayer film, laminated glass was prepared in the same manner as in Example **1.**

(Evaluation)

(1) Heat shrinkage rate

From the obtained interlayer film, the first resin layer, the second resin layer and the optical film were delaminated and taken out. Each of the obtained first resin layer, the second resin layer and the optical film was heated in water at 60°C

for 30 minutes, and then cooled in water at 20°C for 5 minutes. From a dimension L1 of a measurement object before heating at 60°C for 30 minutes, and a dimension L2 of the measurement object after heating at 60°C for 30 minutes and cooling at 20°C for 5 minutes, a heat shrinkage rate was calculated according to the following formula. The dimension L1 was measured before delaminating and taking out the first resin layer, the second resin layer and the optical film from the interlayer film. The dimension L1 of the first resin layer, the second resin layer and the optical film did not change before and after delaminating and taking out the first resin layer, the second resin layer and the optical film from the interlayer film.

Heat shrinkage rate A1 (%) of the first resin layer in the direction where heat shrinkage rate of the first resin layer becomes maximum

Heat shrinkage rate A2 (%) of the second resin layer in the direction where heat shrinkage rate of the second resin layer becomes maximum

Heat shrinkage rate A3 (%) of the optical film in the direction where heat shrinkage rate of the optical film becomes maximum

Heat shrinkage rate B1 (%) of the first resin layer in the direction perpendicular to the direction where heat shrinkage rate of the first resin layer becomes maximum

Heat shrinkage rate B2 (%) of the second resin layer in the direction perpendicular to the direction where heat shrinkage rate of the second resin layer becomes maximum

Heat shrinkage rate B3 (%) of the optical film in the direction perpendicular to the direction where heat shrinkage rate of the optical film becomes maximum

$$\text{Heat shrinkage rate (\%)} = (L1 - L2)/L1 \times 100$$

L1: Dimension before heating at 60°C for 30 minutes (mm)
L2: Dimension after heating at 60°C for 30 minutes and cooling at 20°C for 5 minutes (mm)

From the measured heat shrinkage rates, the thickness T1 of the first resin layer, and the thickness T2 of the second resin layer, a value X was calculated by the following formula (X), and a value Y was calculated according to the following formula (Y).

$$\text{Value X} = (A1 \times T1)/(A2 \times T2) \cdots (X)$$

A1: Heat shrinkage rate (%) of the first resin layer in the direction where heat shrinkage rate of the first resin layer becomes maximum
A2: Heat shrinkage rate (%) of the second resin layer in the direction where heat shrinkage rate of the second resin layer becomes maximum
T1: Thickness of the first resin layer (μm)
T2: Thickness of the second resin layer (μm)

$$\text{Value Y} = (B1 \times T1)/(B2 \times T2) \cdots (Y)$$

B1: Heat shrinkage rate (%) of the first resin layer in the direction perpendicular to the direction where heat shrinkage rate of the first resin layer becomes maximum
B2: Heat shrinkage rate (%) of the second resin layer in the direction perpendicular to the direction where heat shrinkage rate of the second resin layer becomes maximum
T1: Thickness of the first resin layer (μm)
T2: Thickness of the second resin layer (μm)

(2) Visible light transmittance of resin layer

From the obtained interlayer film, the first resin layer and the second resin layer were delaminated. The obtained resin layer (the first resin layer or the second resin layer) was sandwiched between two sheets of 2.5-mm thick clear glass conforming to JIS R3202:1996 to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain the laminated glass **A.** Visible light transmittance of the first resin layer and the second resin layer was measured using a spectrophotometer ("U-4150" available from Hitachi High-Tech Science Corporation) according to the method described above.

(3) Surface roughness of surface of resin layer

In the obtained interlayer film, using "Surfcorder SE300" available from Kosaka Laboratory Ltd., the surface roughness R1 of the outer surface of the first resin layer and the surface roughness R2 of the outer surface of the second resin layer were measured in accordance with JIS B0601:1994. Each of the surface roughness R1 and the surface roughness R2 is the ten-point average roughness Rz. Also, an average value of the surface roughness R1 and the surface roughness R2((surface roughness R1 + surface roughness R2)/2) was determined as an average surface roughness.

(4) Curvature of interlayer film

The obtained interlayer film was cut into a size of 100 mm long and 100 mm wide, to obtain a measurement sample. The measurement sample has a square shape in planar view, and the point of intersection between diagonal lines in the square was the center position between the one end and the other end of the interlayer film. The measurement sample of 100 mm long and 100 mm wide was heated in water at 60°C for 30 minutes, and then cooled in water at 20°C for 5 minutes. The measurement sample after cooling was placed on a horizontal and flat pedestal, and left to stand for 1 minute. The measurement sample was placed on the pedestal with the resin layer having a larger thickness of the first resin layer and the second resin layer, namely the second resin layer down. After leaving the measurement sample to stand at 20°C for 1 minute, the maximum distance from the surface of the pedestal to the bottom surface of the sample was measured. Curvature of the interlayer film was determined according to the following criteria for judgement.

[Criterial for judgement in curvature of interlayer film]

○○○: The maximum distance is 0 mm or more and 4 mm or less.
○○: The maximum distance is more than 4 mm and 9 mm or less.
○: The maximum distance is more than 9 mm and 15 mm or less.
×: The maximum distance is more than 15 mm.

Configurations of interlayer films and results are shown in the following Tables 1 to 12.

[Table 1]

| | | | Example 1 | Example 2 | Example 3 |
|---|---|---|---|---|---|
| First resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | ITO particles | ITO particles | ITO particles |
| | | % by weight | 0.3 | 0.3 | 0.3 |
| | Thickness T1 | μm | 370 | 360 | 310 |
| Optical film | Kind | | A | A | A |
| | Thickness T3 | μm | 100 | 100 | 100 |

(continued)

| | | | Example 1 | Example 2 | Example 3 |
|---|---|---|---|---|---|
| Second resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | - | - | - |
| | | % by weight | - | - | - |
| | Thickness T2 | μm | 720 | 750 | 760 |

[Table 2]

| | | | Example 1 | Example 2 | Example 3 |
|---|---|---|---|---|---|
| Heat shrinkage rate A1 of first resin layer | | % | 33.0 | 28.0 | 19.2 |
| Heat shrinkage rate A2 of second resin layer | | % | 19.0 | 15.0 | 13.2 |
| Heat shrinkage rate A3 of optical film | | % | 0.0 | 0.0 | 0.0 |
| Heat shrinkage rate B1 of first resin layer | | % | -15.0 | -10.0 | -5.6 |
| Heat shrinkage rate B2 of second resin layer | | % | -6.0 | -6.0 | -5.2 |
| Heat shrinkage rate B3 of optical film | | % | 0.0 | 0.0 | 0.0 |
| Ratio (A1/A2) | | - | 1.74 | 1.87 | 1.45 |
| Value X (= (A1 × T1) / (A2 × T2)) | | - | 0.89 | 0.90 | 0.59 |
| Ratio (B1/B2) | | - | 2.50 | 1.67 | 1.08 |
| Value Y (= (B1 × T1)/(B2 × T2)) | | - | 1.28 | 0.80 | 0.44 |
| Ratio (T1/T2) | | - | 0.51 | 0.48 | 0.41 |
| Ratio (T3/T2) | | - | 0.14 | 0.13 | 0.13 |
| Visible light transmittance | First resin layer | % | 87.5 | 87.7 | 88.0 |
| | Second resin layer | % | 89.0 | 88.9 | 88.9 |
| Surface roughness R1 of first resin layer | | μm | 30 | 31 | 32 |
| Surface roughness R2 of second resin layer | | μm | 32 | 33 | 35 |
| Average surface roughness | | μm | 31 | 32 | 34 |
| Curvature of interlayer film | | Determination | ○○○ | ○○ | ○○ |

[Table 3]

| | | | Example 4 | Example 5 | Example 6 |
|---|---|---|---|---|---|
| First resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | ITO particles | ITO particles | ITO particles |
| | | % by weight | 0.3 | 0.3 | 0.3 |
| | Thickness T1 | μm | 290 | 380 | 360 |
| Optical film | Kind | | B | A | C |
| | Thickness T3 | μm | 50 | 100 | 40 |

(continued)

| | | | Example 4 | Example 5 | Example 6 |
|---|---|---|---|---|---|
| Second resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | - | - | - |
| | | % by weight | - | - | - |
| | Thickness T2 | μm | 800 | 790 | 780 |

[Table 4]

| | | | Example 4 | Example 5 | Example 6 |
|---|---|---|---|---|---|
| Heat shrinkage rate A1 of first resin layer | | % | 29.2 | 10.2 | 10.6 |
| Heat shrinkage rate A2 of second resin layer | | % | 22.0 | 8.4 | 7.4 |
| Heat shrinkage rate A3 of optical film | | % | 0.0 | 0.0 | 0.0 |
| Heat shrinkage rate B1 of first resin layer | | % | -11.2 | -2.0 | -3.8 |
| Heat shrinkage rate B2 of second resin layer | | % | -6.6 | -0.6 | -2.8 |
| Heat shrinkage rate B3 of optical film | | % | 1.0 | 0.0 | 0.0 |
| Ratio (A1/A2) | | - | 1.33 | 1.21 | 1.43 |
| Value X (= (A1 × T1) / (A2 × T2)) | | - | 0.48 | 0.58 | 0.66 |
| Ratio (B1/B2) | | - | 1.70 | 3.33 | 1.36 |
| Value Y (= (B1 × T1) / (B2 × T2)) | | - | 0.62 | 1.60 | 0.63 |
| Ratio (T1/T2) | | - | 0.36 | 0.48 | 0.46 |
| Ratio (T3/T2) | | - | 0.06 | 0.13 | 0.05 |
| Visible light transmittance | First resin layer | % | 87.3 | 87.4 | 87.6 |
| | Second resin layer | % | 88.7 | 88.7 | 88.8 |
| Surface roughness R1 of first resin layer | | μm | 33 | 30 | 31 |
| Surface roughness R2 of second resin layer | | μm | 37 | 32 | 32 |
| Average surface roughness | | μm | 35 | 31 | 32 |
| Curvature of interlayer film | | Determination | ○○ | ○○ | ○○ |

[Table 5]

| | | | Example 7 | Example 8 | Example 9 |
|---|---|---|---|---|---|
| First resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | ITO particles | ITO particles | ITO particles |
| | | % by weight | 0.3 | 0.3 | 0.3 |
| | Thickness T1 | μm | 330 | 390 | 355 |
| Optical film | Kind | | A | A | C |
| | Thickness T3 | μm | 100 | 100 | 40 |

(continued)

| | | | Example 7 | Example 8 | Example 9 |
|---|---|---|---|---|---|
| Second resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | - | - | - |
| | | % by weight | - | - | - |
| | Thickness T2 | μm | 770 | 400 | 380 |

[Table 6]

| | | | Example 7 | Example 8 | Example 9 |
|---|---|---|---|---|---|
| Heat shrinkage rate A1 of first resin layer | | % | 29.2 | 12.0 | 11.6 |
| Heat shrinkage rate A2 of second resin layer | | % | 14.0 | 10.0 | 10.4 |
| Heat shrinkage rate A3 of optical film | | % | 0.0 | 0.0 | 0.0 |
| Heat shrinkage rate B1 of first resin layer | | % | -10.6 | -2.6 | -2.6 |
| Heat shrinkage rate B2 of second resin layer | | % | -6.2 | -1.2 | -1.2 |
| Heat shrinkage rate B3 of optical film | | % | 0.0 | 0.0 | 0.0 |
| Ratio (A1/A2) | | - | 2.09 | 1.20 | 1.12 |
| Value X (= (A1 × T1) / (A2 × T2)) | | - | 0.89 | 1.17 | 1.04 |
| Ratio (B1/B2) | | - | 1. 71 | 2.17 | 2.17 |
| Value Y (= (B1 × T1) / (B2 × T2)) | | - | 0.73 | 2.11 | 2.02 |
| Ratio (T1/T2) | | - | 0.43 | 0.98 | 0.93 |
| Ratio (T3/T2) | | - | 0.13 | 0.25 | 0.11 |
| Visible light transmittance | First resin layer | % | 87.8 | 87.3 | 87.7 |
| | Second resin layer | % | 88.9 | 88.9 | 89.0 |
| Surface roughness R1 of first resin layer | | μm | 33 | 31 | 33 |
| Surface roughness R2 of second resin layer | | μm | 33 | 30 | 33 |
| Average surface roughness | | μm | 33 | 31 | 33 |
| Curvature of interlayer film | | Determination | ○ | ○○○ | ○○○ |

[Table 7]

| | | | Example 10 | Example 11 |
|---|---|---|---|---|
| First resin layer | Thermoplastic resin | Kind | A | A |
| | | parts by weight | 100 | 100 |
| | Plasticizer | Kind | 3GO | 3GO |
| | | parts by weight | 40 | 40 |
| | Heat shielding substance | Kind | ITO particles | ITO particles |
| | | % by weight | 0.3 | 0.3 |
| | Thickness T1 | μm | 360 | 440 |
| Optical film | Kind | | C | C |
| | Thickness T3 | μm | 40 | 40 |

(continued)

| | | | Example 10 | Example 11 |
|---|---|---|---|---|
| Second resin layer | Thermoplastic resin | Kind | A | A |
| | | parts by weight | 100 | 100 |
| | Plasticizer | Kind | 3GO | 3GO |
| | | parts by weight | 40 | 40 |
| | Heat shielding substance | Kind | - | - |
| | | % by weight | - | - |
| | Thickness T2 | μm | 810 | 810 |

[Table 8]

| | | | Example 10 | Example 11 |
|---|---|---|---|---|
| Heat shrinkage rate A1 of first resin layer | | % | 38.0 | 26.0 |
| Heat shrinkage rate A2 of second resin layer | | % | 11.0 | 11.0 |
| Heat shrinkage rate A3 of optical film | | % | 0.0 | 0.0 |
| Heat shrinkage rate B1 of first resin layer | | % | -22.0 | -15.0 |
| Heat shrinkage rate B2 of second resin layer | | % | -7.0 | -7.0 |
| Heat shrinkage rate B3 of optical film | | % | 0.0 | 0.0 |
| Ratio (A1/A2) | | - | 3.45 | 2.36 |
| Value X (= (A1 × T1) / (A2 × T2)) | | - | 1.54 | 1.28 |
| Ratio (B1/B2) | | - | 3.14 | 2.14 |
| Value Y (= (B1 × T1) / (B2 × T2)) | | - | 1.40 | 1.16 |
| Ratio (T1/T2) | | - | 0.44 | 0.54 |
| Ratio (T3/T2) | | - | 0.05 | 0.05 |
| Visible light transmittance | First resin layer | % | 87.6 | 87.0 |
| | Second resin layer | % | 88.7 | 88.7 |
| Surface roughness R1 of first resin layer | | μm | 32 | 36 |
| Surface roughness R2 of second resin layer | | μm | 33 | 32 |
| Average surface roughness | | μm | 33 | 34 |
| Curvature of interlayer film | | Determination | ○○ | ○○○ |

[Table 9]

| | | | Comparative Example 1 | Comparative Example 2 | Comparative Example 3 |
|---|---|---|---|---|---|
| First resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | ITO particles | ITO particles | ITO particles |
| | | % by weight | 0.3 | 0.3 | 0.3 |
| | Thickness T1 | μm | 330 | 420 | 420 |

(continued)

| | | | Comparative Example 1 | Comparative Example 2 | Comparative Example 3 |
|---|---|---|---|---|---|
| Optical film | Kind | | A | A | A |
| | Thickness T3 | μm | 100 | 100 | 100 |
| Second resin layer | Thermoplastic resin | Kind | A | A | A |
| | | parts by weight | 100 | 100 | 100 |
| | Plasticizer | Kind | 3GO | 3GO | 3GO |
| | | parts by weight | 40 | 40 | 40 |
| | Heat shielding substance | Kind | - | - | - |
| | | % by weight | - | - | - |
| | Thickness T2 | μm | 770 | 600 | 700 |

[Table 10]

| | | | Comparative Example 1 | Comparative Example 2 | Comparative Example 3 |
|---|---|---|---|---|---|
| Heat shrinkage rate A1 of first resin layer | | % | 43.8 | 13.0 | 13.0 |
| Heat shrinkage rate A2 of second resin layer | | % | 7.0 | 40.0 | 35.0 |
| Heat shrinkage rate A3 of optical film | | % | 0.0 | 0.0 | 0.0 |
| Heat shrinkage rate B1 of first resin layer | | % | -15.9 | -9.0 | -9.0 |
| Heat shrinkage rate B2 of second resin layer | | % | -3.1 | -24.0 | -20.0 |
| Heat shrinkage rate B3 of optical film | | % | 0.0 | 0.0 | 0.0 |
| Ratio (A1/A2) | | - | 6.26 | 0.33 | 0.37 |
| Value X (= (A1 × T1) / (A2 × T2)) | | - | 2.68 | 0.23 | 0.22 |
| Ratio (B1/B2) | | - | 5.13 | 0.38 | 0.45 |
| Value Y (= (B1 × T1) / (B2 × T2)) | | - | 2.20 | 0.26 | 0.27 |
| Ratio (T1/T2) | | - | 0.43 | 0.70 | 0.60 |
| Ratio (T3/T2) | | - | 0.13 | 0.17 | 0.14 |
| Visible light transmittance | First resin layer | % | 87.7 | 87.1 | 87.1 |
| | Second resin layer | % | 88.9 | 89.4 | 89.1 |
| Surface roughness R1 of first resin layer | | μm | 28 | 28 | 25 |
| Surface roughness R2 of second resin layer | | μm | 32 | 30 | 30 |
| Average surface roughness | | μm | 30 | 29 | 28 |
| Curvature of interlayer film | | Determination | × | × | × |

[Table 11]

| | | | Comparative Example 4 | Comparative Example 5 |
|---|---|---|---|---|
| First resin layer | Thermoplastic resin | Kind | A | A |
| | | parts by weight | 100 | 100 |
| | Plasticizer | Kind | 3GO | 3GO |
| | | parts by weight | 40 | 40 |
| | Heat shielding substance | Kind | ITO particles | ITO particles |
| | | % by weight | 0.3 | 0.3 |
| | Thickness T1 | μm | 420 | 350 |
| Optical film | Kind | | A | C |
| | Thickness T3 | μm | 100 | 40 |
| Second resin layer | Thermoplastic resin | Kind | A | A |
| | | parts by weight | 100 | 100 |
| | Plasticizer | Kind | 3GO | 3GO |
| | | parts by weight | 40 | 40 |
| | Heat shielding substance | Kind | - | - |
| | | % by weight | - | - |
| | Thickness T2 | μm | 740 | 980 |

[Table 12]

| | | | Comparative Example 4 | Comparative Example 5 |
|---|---|---|---|---|
| Heat shrinkage rate A1 of first resin layer | | % | 13.0 | 47.0 |
| Heat shrinkage rate A2 of second resin layer | | % | 25.0 | 2.0 |
| Heat shrinkage rate A3 of optical film | | % | 0.0 | 0.0 |
| Heat shrinkage rate B1 of first resin layer | | % | -9.0 | 2.0 |
| Heat shrinkage rate B2 of second resin layer | | % | -14.0 | 8.0 |
| Heat shrinkage rate B3 of optical film | | % | 0.0 | 0.0 |
| Ratio (A1/A2) | | - | 0.52 | 23.50 |
| Value X (= (A1 × T1) / (A2 × T2)) | | - | 0.30 | 8.39 |
| Ratio (B1/B2) | | - | 0.64 | 0.25 |
| Value Y (= (B1 × T1) / (B2 × T2)) | | - | 0.36 | 0.09 |
| Ratio (T1/T2) | | - | 0.57 | 0.36 |
| Ratio (T3/T2) | | - | 0.14 | 0.04 |
| Visible light transmittance | First resin layer | % | 87.1 | 87.7 |
| | Second resin layer | % | 89.0 | 88.1 |
| Surface roughness R1 of first resin layer | | μm | 35 | 33 |
| Surface roughness R2 of second resin layer | | μm | 31 | 33 |
| Average surface roughness | | μm | 33 | 33 |
| Curvature of interlayer film | | Determination | × | × |

**EXPLANATION OF SYMBOLS**

1: First resin layer

2: Second resin layer

3: Optical film

3a: First surface

3b: Second surface

11: Interlayer film

21: First lamination glass member

22: Second lamination glass member

31: Laminated glass

## Claims

1. An interlayer film for laminated glass, comprising:

a first resin layer containing a thermoplastic resin;
a second resin layer containing a thermoplastic resin; and
an optical film,
wherein the first resin layer being arranged on a first surface side of the optical film, the second resin layer being arranged on a second surface side opposite to the first surface of the optical film,
a thickness T1 of the first resin layer being smaller than a thickness T2 of the second resin layer,
a ratio of a heat shrinkage rate A1 of the first resin layer in a direction where heat shrinkage rate of the first resin layer becomes maximum to a heat shrinkage rate A2 of the second resin layer in a direction where heat shrinkage rate of the second resin layer becomes maximum being more than 1 and 5 or less.

2. An interlayer film for laminated glass comprising:

a first resin layer containing a thermoplastic resin;
a second resin layer containing a thermoplastic resin; and
an optical film,
wherein the first resin layer being arranged on a first surface side of the optical film, the second resin layer being arranged on a second surface side opposite to the first surface of the optical film,
a thickness T1 of the first resin layer being smaller than a thickness T2 of the second resin layer,
a ratio of a heat shrinkage rate A1 of the first resin layer in a direction where heat shrinkage rate of the first resin layer becomes maximum to a heat shrinkage rate A2 of the second resin layer in a direction where heat shrinkage rate of the second resin layer becomes maximum being more than 1,
a value X determined by a formula (X) below from the heat shrinkage rate A1 of the first resin layer in the direction where heat shrinkage rate of the first resin layer becomes maximum, the heat shrinkage rate A2 of the second resin layer in the direction where heat shrinkage rate of the second resin layer becomes maximum, the thickness T1 of the first resin layer, and the thickness T2 of the second resin layer being more than 0.5 and 2.5 or less:

$$\text{Value } X = (A1 \times T1)/(A2 \times T2) \cdots (X)$$

3. The interlayer film for laminated glass according to claim 1 or 2, wherein a ratio of the thickness T1 of the first resin layer to the thickness T2 of the second resin layer is 0.98 or less.

**4.** The interlayer film for laminated glass according to any one of claims 1 to 3, wherein a heat shrinkage rate A3 of the optical film in a direction where heat shrinkage rate of the optical film becomes maximum is -1% or more and 1% or less.

**5.** The interlayer film for laminated glass according to any one of claims 1 to 4, wherein

an absolute value of difference between the heat shrinkage rate A1 of the first resin layer and the heat shrinkage rate A3 of the optical film is 33% or less, or
an absolute value of difference between the heat shrinkage rate A2 of the second resin layer and the heat shrinkage rate A3 of the optical film is 22% or less.

**6.** The interlayer film for laminated glass according to any one of claims 1 to 5, wherein the optical film is a multilayer resin film.

**7.** The interlayer film for laminated glass according to any one of claims 1 to 6, wherein the first resin layer or the second resin layer contains a heat shielding substance.

**8.** The interlayer film for laminated glass according to any one of claims 1 to 7, wherein

the first resin layer contains a heat shielding substance, and
the second resin layer does not contain a heat shielding substance, or contains a heat shielding substance in a content that is smaller than a content of the heat shielding substance in 100% by weight of the first resin layer.

**9.** The interlayer film for laminated glass according to any one of claims 1 to 8, wherein a visible light transmittance of the first resin layer and a visible light transmittance of the second resin layer are different from each other.

**10.** The interlayer film for laminated glass according to any one of claims 1 to 9, wherein

a ratio of the thickness T1 of the first resin layer to the thickness T2 of the second resin layer is 0.1 or more and 0.98 or less, and
a ratio of the thickness T3 of the optical film to the thickness T2 of the second resin layer is 0.02 or more and 0.55 or less.

**11.** The interlayer film for laminated glass according to any one of claims 1 to 10,

wherein a maximum distance from a surface of a pedestal to a bottom surface of an interlayer film for laminated glass measured by a measuring method below is 15 mm or less,
the measuring method of maximum distance from the surface of the pedestal to the bottom surface of the interlayer film for laminated glass including: heating an interlayer film for laminated glass of 100 mm long and 100 mm wide in water at 60°C for 30 minutes, followed by cooling in water at 20°C for 5 minutes, placing the interlayer film for laminated glass after cooling on a horizontal and flat pedestal and leaving to stand at 20°C for 1 minute, and measuring a maximum distance from the surface of the pedestal to the bottom surface of the interlayer film for laminated glass at this time.

**12.** A laminated glass comprising:

a first lamination glass member;
a second lamination glass member; and
the interlayer film for laminated glass according to any one of claims 1 to 11,
wherein the interlayer film for laminated glass being arranged between the first lamination glass member and the second lamination glass member.

[FIG. 1]

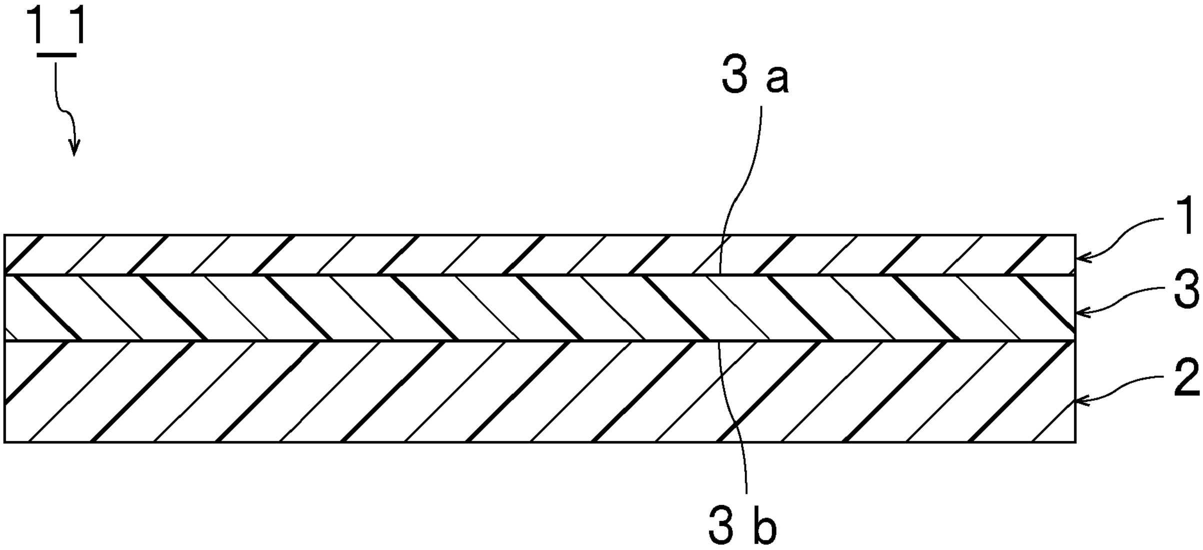


[FIG. 2]

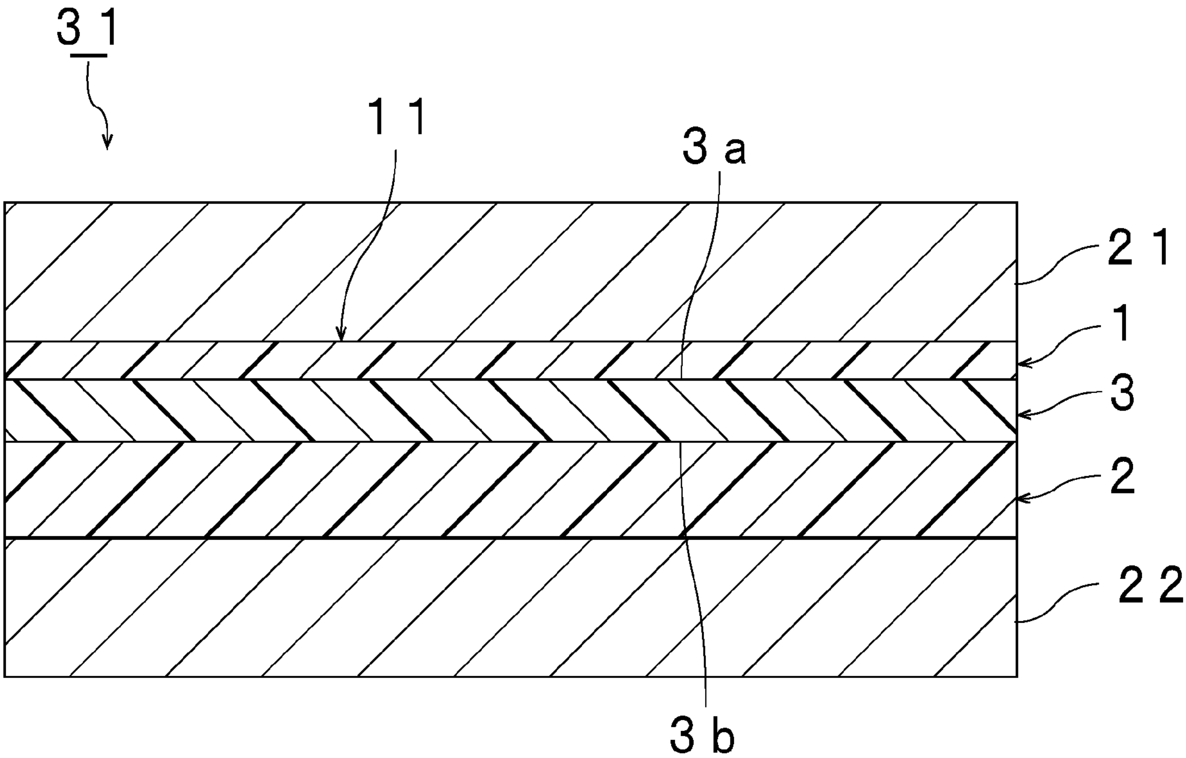

**INTERNATIONAL SEARCH REPORT**

International application No.
**PCT/JP2023/027809**

**A. CLASSIFICATION OF SUBJECT MATTER**

***C03C 27/12***(2006.01)i; ***B32B 7/028***(2019.01)i; ***B32B 27/00***(2006.01)i
FI: C03C27/12 N; B32B7/028; B32B27/00 B

According to International Patent Classification (IPC) or to both national classification and IPC

**B. FIELDS SEARCHED**

Minimum documentation searched (classification system followed by classification symbols)

C03C27/12; B32B7/028; B32B27/00-27/42; B60J1/00-1/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/203142 A1 (AGC INC.) 24 October 2019 (2019-10-24) paragraphs [0099]-[0103] | 1-12 |
| A | WO 2019/189741 A1 (SEKISUI CHEMICAL CO., LTD.) 03 October 2019 (2019-10-03) examples | 1-12 |
| A | JP 2018-145068 A (SEKISUI CHEMICAL CO., LTD.) 20 September 2018 (2018-09-20) paragraphs [0053]-[0058], [0073] | 1-12 |
| P, X | WO 2022/260084 A1 (SEKISUI CHEMICAL CO., LTD.) 15 December 2022 (2022-12-15) claims, examples | 2-3, 5, 9-12 |

☐ Further documents are listed in the continuation of Box C.
☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/027809**

| Patent document cited in search report | Publication date (day/month/year) | Patent family member(s) | Publication date (day/month/year) |
|---|---|---|---|
| WO 2019/203142 A1 | 24 October 2019 | US 2021/0011209 A1<br>paragraphs [0113]-[0118]<br>CN 112041284 A | |
| WO 2019/189741 A1 | 03 October 2019 | EP 3778517 A1<br>examples<br>US 2021/0078303 A1<br>CN 111918850 A<br>KR 10-2020-0138191 A | |
| JP 2018-145068 A | 20 September 2018 | (Family: none) | |
| WO 2022/260084 A1 | 15 December 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011078137 A1